# EUROPEAN PATENT APPLICATION

(11) **EP 2 950 194 A1**
(43) Date of publication of application: **02.12.2015**
(21) Application number: 15156692.4
(22) Date of filing: 26.02.2015
(51) Int. Cl.: G06F 3/0488

(54) **Method of enhancing interaction efficiency of multi-user collaborative graphical user interface (GUI) and device thereof**

(30) Priority: 30.05.2014 IN CH26762014; 23.07.2014 US 201414339184
(71) Applicant: Wipro Limited, 560 035 Karnataka (IN)
(72) Inventor: Madhusudhanan, Manoj, 560098 Karnataka (IN); Pandey, Garima, 560095 Karnataka (IN); Ganesh, Sangita, 560034 Karnataka (IN)
(74) Representative: Finnegan Europe LLP

(57) **Abstract**

A multi-user collaborative graphical user interface (GUI) (107) for a device (100) comprises an action area (117) configured to display an object of interest. The object of interest is common to a plurality of users (115) interacting with the GUI. The GUI further comprises one or more menu icons (109) corresponding to one or more actions associated with the object of interest, wherein the one or more menu icons are rotatable in at least one of clockwise and anti-clockwise directions.

## Description

### TECHNICAL FIELD

The present subject matter is related, in general, to a graphical user interface (GUI), and more particularly, but not exclusively, to a method and device for enhancing interaction efficiency of a multi-user collaborative GUI.

### BACKGROUND

Digital display systems and multi-user interface technologies, particularly multi-touch systems, create a practical environment for rich collaborative workspaces, in which two or more users may work side-by-side at the same display. In the multi-touch systems there is a need for users to interact by neither affecting other simultaneous user interactions nor changing orientation and position of the display system in order to facilitate efficient collaboration.

Currently, most of the multi-user interfaces that exist do not enable efficient collaboration as they are designed based on the method used for single user interactions in single user devices. If the design concept used for multi user devices is same as the design concept used for single user devices, then the other users simultaneously using the multi-user interface lose their interaction efficiency with the multi-user interface. The interaction efficiency for a single user using smaller interfaces is generally high, whereas in large multi-user devices there is a need to improve the interaction efficiency for each user interacting with the interface.

The conventional methods for enhancing interaction efficiency of the multi-user interface such as auto orientation, orientation freeze etc. attempt to address the above-mentioned issues, but fail to consider the interaction efficiency and functionality independence of each user in the multi-user interface scenario. Therefore, there is a need to improve the interaction efficiency of the multi-user interface without having fixed/rigid interaction functionalities, thereby enabling multiple users to interact with the interface without affecting other user's interactions.

### SUMMARY

One or more shortcomings of the prior art are overcome and additional advantages are provided through the present disclosure. Additional features and advantages are realized through the techniques of the present disclosure. Other embodiments and aspects of the disclosure are described in detail herein and are considered a part of the claimed disclosure.

Accordingly, the present disclosure relates to a method of enhancing interaction efficiency of multi-user collaborative graphical user interface (GUI). The method comprises displaying an object of interest on an action area of the GUI. The object of interest is common to plurality of users interacting with the GUI. Upon displaying the object of interest, one or more menu icons corresponding to one or more actions associated with the object of interest are displayed. The one or more menu icons are rotatable in at least one of clockwise and anti-clockwise directions. The method further comprises detecting selection of the one or more menu icons by the plurality of users. The selection of the one or more menu icons causes the processing unit to perform at least one of displaying one or more movable sub-menu icons corresponding to one or more actions associated with the object of interest and executing the one or more actions corresponding to the selected one or more menu icons on the object of interest to obtain a processed object.

The method may further comprise displaying, by the processing unit, the processed object on at least one side panel area of the GUI, wherein the processed object is orientable in one or more directions. The one or more menu icons may be displayed on at least one of boundary of the action area and periphery of the action area. The one or more movable sub-menu icons may be movable across the GUI. The method may further comprise: detecting, by the processing unit, selection of the one or more movable sub-menu icons by the plurality of users; and executing, by the processing unit, the one or more actions corresponding to the selected one or more movable sub-menu icons on the object of interest to obtain the processed object.

Further, the present disclosure relates to a multi-user collaborative graphical user interface (GUI) for a device. The GUI comprises an action area configured to display an object of interest, wherein the object of interest is common to plurality of users interacting with the GUI, and one or more menu icons corresponding to one or more actions associated with the object of interest, wherein the one or more menu icons are rotatable in at least one of clockwise and anti-clockwise directions.

Furthermore, the present disclosure relates to device for enhancing interaction efficiency of multi-user collaborative graphical user interface (GUI). The device comprising a multi touch screen display to receive a touch of an input means on the GUI displayed on the touch screen display and at least one processing unit. The device further comprises a memory storing instructions executable by the at least one processing unit, wherein the instructions configure the at least one processing unit to: display an object of interest on an action area of the GUI configured in the touch screen display, wherein the object of interest is common to plurality of users interacting with the GUI; display one or more menu icons corresponding to one or more actions associated with the object of interest, wherein the one or more menu icons are rotatable in at least one of clockwise and anti-clockwise directions; upon displaying the one or more menu icons, detect selection of the one or more menu icons by the plurality of users. The selection of one or more menu icons causes the processing unit to perform at least one of: displaying one or more movable sub-menu icons corresponding to one or more actions associated with the object of interest and; executing the one or more actions corresponding to the selected one or more menu icons on the object of interest to obtain a processed object.

The processing unit may be capable of displaying the processed object on at least one side panel area of the GUI. The processing unit may be capable of orienting the processed object in one or more directions. The processing unit may be capable of: detecting selection of the one or more movable sub-menu icons by the plurality of users; and executing the one or more actions corresponding to the selected one or more movable sub-menu icons on the object of interest to obtain the processed object. The processing unit may be capable of displaying one or more menu icons on at least one of boundary of the action area and periphery of the action area. The one or more movable sub-menu icons may be movable across the GUI.

Furthermore, the present disclosure relates to a non-transitory computer readable medium including operations stored thereon that when processed by at least one processor cause a device to perform the acts of displaying an object of interest on an action area of the GUI, wherein the object of interest is common to plurality of users interacting with the GUI. Upon displaying the object of interest, the processing unit further causes the device to display one or more menu icons on the GUI, wherein the one or more menu icons are rotatable in at least one of clockwise and anti-clockwise directions. The processing unit further causes the device to detect selection of the one or more menu icons by the plurality of users. Upon detecting the selection of the one or more menu icons, the processing unit causes the device to perform at least one of displaying one or more movable sub-menu icons corresponding to one or more actions associated with the object of interest and executing the one or more actions corresponding to the selected one or more menu icons on the object of interest to obtain a processed object.

The foregoing summary is illustrative only and is not intended to be in any way limiting. In addition to the illustrative aspects, embodiments, and features described above, further aspects, embodiments, and features will become apparent by reference to the drawings and the following detailed description.

### BRIEF DESCRIPTION OF THE DRAWINGS

The accompanying drawings, which are incorporated in and constitute a part of this disclosure, illustrate exemplary embodiments and, together with the description, serve to explain the disclosed principles. In the figures, the left-most digit(s) of a reference number identifies the figure in which the reference number first appears. The same numbers are used throughout the figures to reference like features and components. Some embodiments of system and/or methods in accordance with embodiments of the present subject matter are now described, by way of example only, and with reference to the accompanying figures, in which:
**Fig. 1** illustrates a block diagram of a device in accordance with some embodiments of the present disclosure;
**Figs. 2a-2b** illustrates a block diagram of an exemplary multi-user collaborative graphical user interface (GUI) in accordance with some embodiments of the present disclosure;
**Figs. 3a-3b** illustrates a block diagram of another exemplary multi-user collaborative GUI in accordance with some embodiments of the present disclosure;
**Figs. 4a-4d** illustrates an exemplary environment for enhancing interaction efficiency of a multi-user collaborative GUI in accordance with some embodiments of the present disclosure;
**Figs. 5a-5d** illustrates another exemplary environment for enhancing interaction efficiency of a multi-user collaborative GUI in accordance with some embodiments of the present disclosure;
**Figs. 6a-6g** illustrates a method for enhancing interaction efficiency of a multi-user collaborative GUI in accordance with some exemplary embodiments of the present disclosure; and
**Fig. 7** illustrates a flowchart of method of enhancing interaction efficiency of a multi-user collaborative GUI in accordance with some embodiments of the present disclosure.

It should be appreciated by those skilled in the art that any block diagrams herein represent conceptual views of illustrative systems embodying the principles of the present subject matter. Similarly, it will be appreciated that any flow charts, flow diagrams and the like represent various processes which may be substantially represented in computer readable medium and executed by a computer or processor, whether or not such computer or processor is explicitly shown.

### DETAILED DESCRIPTION

In the present document, the word "exemplary" is used herein to mean "serving as an example, instance, or illustration." Any embodiment or implementation of the present subject matter described herein as "exemplary" is not necessarily to be construed as preferred or advantageous over other embodiments.

While the disclosure is susceptible to various modifications and alternative forms, specific embodiment thereof has been shown by way of example in the drawings and will be described in detail below. It should be understood, however that it is not intended to limit the disclosure to the particular forms disclosed, but on the contrary, the disclosure is to cover all modifications, equivalents, and alternative falling within the spirit and the scope of the disclosure.

The terms "comprises", "comprising", or any other variations thereof, are intended to cover a non-exclusive inclusion, such that a setup, device or method that comprises a list of components or steps does not include only those components or steps but may include other components or steps not expressly listed or inherent to such setup or device or method. In other words, one or more elements in a system or apparatus proceeded by "comprises... a" does not, without more constraints, preclude the existence of other elements or additional elements in the system or apparatus.

Accordingly, the present disclosure relates to method and device for enhancing interaction efficiency of a multi-user collaborative interface. The method includes, displaying an object of interest on an action area of the GUI. The object of interest depends on the application being executed in the device. Based on the application being executed in the device, the processing unit configured in the device identifies the object of interest and displays the object of interest on an action area of the GUI. The object of interest is common to plurality of users interacting with the GUI. Upon displaying the object of interest, the processing unit displays one or more menu icons on the GUI. The one or more menu icons may be displayed on at least one of boundary of the action area and periphery of the action area. The one or more menu icons correspond to one or more actions associated with the object of interest. The one or more menu icons are rotatable in at least one of clock-wise direction and anti-clockwise direction. Since the one or more menu icons are rotatable, the GUI orients itself to the specific needs of the users without obstructing other users' interactions with the GUI. The users may select one or more menu icons.

The processing unit detects the selection of the one or more menu icons and, based on the selection of one or more menu icons, the processing unit identifies whether the selected one or more menu icons are associated with one or more movable sub-menu icons. If the selected one or more menu icons are associated with one or more movable sub-menu icons, the processing unit displays the one or more movable sub-menu icons on the GUI. If the selected one or more menu icons is not associated with one or more movable sub-menu icons, the processing unit executes the one or more actions associated with the selected one or more menu icons on the object of interest to obtain a processed object. The processed object may be displayed on the action area of the GUI. In some embodiments, the processed object may be displayed on either of the side panel area configured in the GUI.

In the following detailed description of the embodiments of the disclosure, reference is made to the accompanying drawings that form a part hereof, and in which are shown by way of illustration specific embodiments in which the disclosure may be practiced. These embodiments are described in sufficient detail to enable those skilled in the art to practice the disclosure, and it is to be understood that other embodiments may be utilized and that changes may be made without departing from the scope of the present disclosure. The following description is, therefore, not to be taken in a limiting sense.

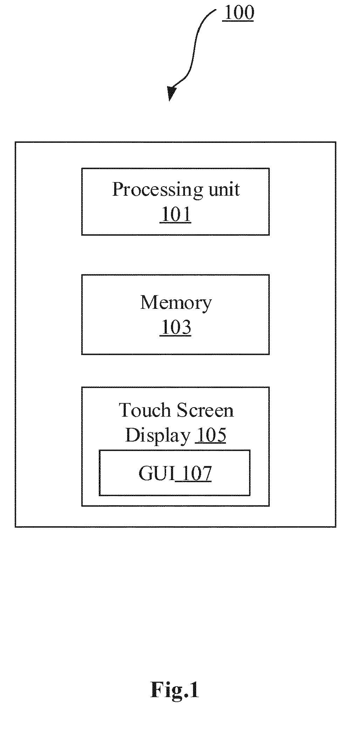

**Fig. 1** illustrates a block diagram of an example of a device **100** in accordance with some embodiments of the present disclosure.

As shown in **Fig. 1****,** the device **100** includes a processing unit **101,** a memory **103** and a touch screen display **105.** Examples of the device include, but are not limited to, a touch screen computer, a tablet, a touch screen mobile device, a touch pad, car navigation systems, medical monitors, industrial control panels and any other processing device having touch screen panel. The device **100** may be configured to execute one or more applications. The one or more applications may include, but not limited to, a gaming application, ring-tone application, banking application and so on. A graphical user interface (GUI) **107** configured in the touch screen display **105** dynamically changes based on the type of application being executed in the device **100.**

In one implementation, the processing unit **101** may comprise at least one data processor for executing program components and for executing user- or system-generated requests. A user may include a person, a person using the device such as those included in this disclosure, or such a device itself. The processing unit **101** may include specialized processing units such as integrated system (bus) controllers, memory management control units, floating point units, graphics processing units, digital signal processing units, etc. The processing unit may include a microprocessor, such as AMD Athlon, Duron or Opteron, ARM's application, embedded or secure processors, IBM PowerPC, Intel's Core, Itanium, Xeon, Celeron or other line of processors, etc. The processing unit **101** may be implemented using mainframe, distributed processor, multi-core, parallel, grid, or other architectures. Some embodiments may utilize embedded technologies like application-specific integrated circuits (ASICs), digital signal processors (DSPs), Field Programmable Gate Arrays (FPGAs), etc. Among other capabilities, the processing unit **101** is configured to fetch and execute computer-readable instructions stored in the memory **103.** The memory **103** can include any non-transitory computer-readable medium known in the art including, for example, volatile memory (e.g., RAM), and/or non-volatile memory (e.g., EPROM, flash memory, etc.).

In some implementations, the touch screen display **105** may be configured to receive a touch of an input means on the GUI **107** displayed on the touch screen display **105.** Examples of the input means include, but are not limited to, stylus, finger, pen shaped pointing device, and any other device that can be used to provide input through a touch screen interface. The touch screen display is a multi-touch screen display configured to receive input from multi-users. The touch screen display **105** is coupled with the processing unit **101** and an I/O device. The I/O device is configured to receive inputs from one or more users via the GUI and transmit outputs for displaying in the I/O device via the GUI.

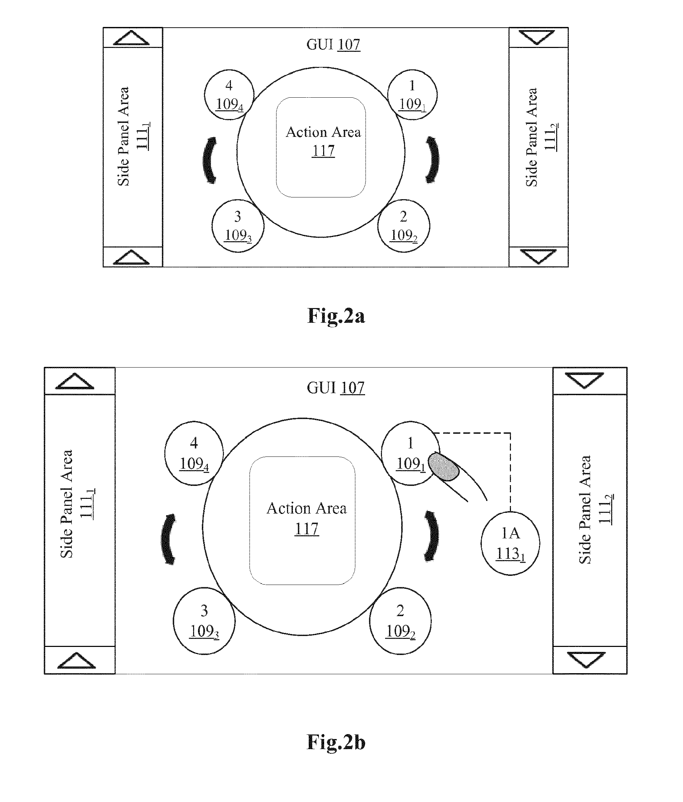

**Figs. 2a-2b** illustrates a block diagram of an exemplary multi-user collaborative graphical user interface GUI **107** in accordance with some embodiments of the present disclosure.

As shown in **Fig.2a** the GUI **107** may include an action area **117,** one or more menu icons, menu icon 1 **109₁**, menu icon 2 **109₂**, menu icon 3 **109₃** and menu icon 4 **109₄** (collectively referred as **109)** and at least one side panel area **111.** In one implementation, the GUI **107** is configured with two side panel areas, the first side panel area **111₁** configured on the left hand side of the GUI **107** and the second side panel area **111₂** configured on the right hand side of the GUI **107.** In some alternative embodiments, the number of side panel areas configured in the GUI **107** may be varied based on the requirements of users or applications.

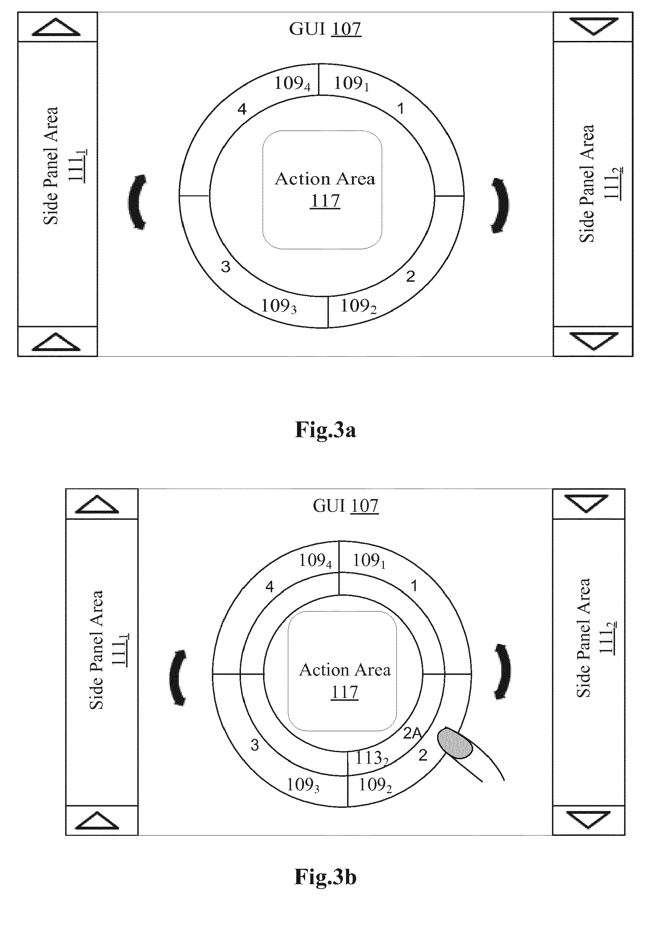

The processing unit **101** displays an object of interest on the action area **117.** The object of interest is defined herein as an object being common to plurality of users interacting with the device **100.** The object of interest depends on the application being executed in the device **100.** For example, the object of interest may include but not limited to, a drawing canvas for a drawing application, banking offers available in a banking application and so on. The GUI **107** dynamically changes based on the application being executed in the device **100.** The object of interest is associated with one or more actions. For example, if the object of interest is a drawing canvas, then the one or more actions may include, but are not limited to, applying a pencil effect for the drawing, applying shades to the drawing, providing color combinations to the drawing and so on. Similarly, if the object of interest is banking offers for a banking application, then the one or more actions may include, but are not limited to, Equated Monthly Instalments (EMI) offers, housing loan, vehicle loan and so on. In some embodiments, the one or more menu icons **109** correspond to one or more actions associated with the object of interest. In some other embodiments, the one or more menu icons **109** are further associated with one or more movable sub-menu icons (best shown in **Fig. 2b****)** and the one or more movable sub-menu icons correspond to one or more actions associated with the object of interest. In one embodiment, the processing unit **101** may display the one or more menu icons **109** on the boundary of the action area (best shown in **Fig. 3a****).** In some other embodiments, the processing unit **101** may display the one or more menu icons **109** on the periphery of the action area (as shown in **Fig. 2a** and **Fig. 2b****).**

As shown in **Fig. 2a****,** the one or more menu icons **109** are displayed on the periphery of the action area. The shape of the one or more menu icons **109** may include, but not limited to, circular, oval, rectangular, and any other suitable shapes. In some embodiments, the one or more menu icons **109** are rotatable in either a clock-wise direction or an anticlockwise direction. Since the one or more menu icons **109** are rotatable, the users don't have to move around the GUI **107** in order to access the one or more menu icons **109.** The users may rotate the one or more menu icons **109** so that the one or more menu icons **109** are near the position of the user for selection.

In operation, the user may select the menu icon 1 **109₁** as shown in **Fig. 2b****.** The processing unit **101** detects the selection of the menu icon 1 **109₁**. If the selected menu icon 1 **109₁** is associated with one or more movable sub-menu icons, the processing unit **101** displays the one or more movable sub-menu icons on the GUI **107.** The one or more movable sub-menu icons are movable across the GUI **107.** The processing unit **101** identifies that the selected sub-menu icon icon 1 **109₁** is associated with the movable sub-menu icon 1A **113₁**. The processing unit **101** displays the movable sub-menu icon 1A **113₁** on the GUI **107.** The user may select the movable sub-menu icon 1A **113₁**. The processing unit **101** detects the selection of the movable sub-menu icon 1A **113₁** and applies the action corresponding to the selected movable sub-menu icon 1A **113₁** on the object of interest. Thereafter, the processing unit **101** processes the object of interest based on the applied action to obtain a processed object. If the selected menu icon 1 **109₁** is not associated with one or more movable sub-menu icons, then the processing unit **101** executes the action associated with the selected menu icon 1 **109₁** on the object of interest to obtain a processed object.

In some embodiments, the processing unit **101** may display the processed object on at least one of the side panel area **111.** In one implementation, the processed object displayed on the side panel area is orientable in one or more directions depending on the position of the users interacting with the GUI **107.**

**Figs. 3a-3b** illustrates a block diagram of another exemplary multi-user collaborative graphical user interface GUI **107** in accordance with some embodiments of the present disclosure.

As shown in **Fig. 3a****,** the one or more menu icons, menu icon 1 **109₁,** menu icon 2 **109₂**, menu icon 3 **109₃** and menu icon 4 **109₄** are displayed on the boundary of the action area **117.** The shape of the one or more menu icons may include, but are not limited to, circular. In some embodiments, the one or more menu icons **109** are rotatable in either a clock-wise direction or an anticlockwise direction. Since the one or more menu icons are rotatable, the users don't have to move around the GUI **107** in order to access the menu icons **109.** Upon receiving the signal from the users, the processing unit **101** rotates the one or more menu icons **109** so that the menu icons **109** are at the required position on the GUI **107** for user selection. As an example, the user may select the menu icon 2 **109_{2.}** The processing unit **101** detects the selection of the menu icon 2 **109_{2.}** Thereafter, the processing unit **101** may either display the one or more movable sub-menu icons associated with the selected menu icon 2 **109₂** or execute the action associated with the selected menu icon 2 **109₂**.

As shown in **Fig. 3b****,** the processing unit **101** displays the one or more sub-menu icons associated with the selected menu icon 2 **109₂** on the GUI **107.** The sub-menu icons associated with the selected menu icon 2 **109₂** is a movable sub-menu icon 2A **113₂**. The processing unit **101** may display the sub-menu icon 2A **113₂** on the GUI **107.** The user may select the sub-menu icon 2A **113₂**. The processing unit **101** detects the selection of the sub-menu icon 2A **113₂** and applies the action corresponding to the selected sub-menu icon 2A **113₂** on the object of interest. Thereafter, the processing unit **101** processes the object of interest based on the applied action to obtain a processed object. In some embodiments, the processing unit **101** may display the processed object on at least one of the side panel area **111.** In one implementation, the processed object displayed on the side panel area **111** is orientable in one or more directions depending on the position of the users interacting with the GUI **107.**

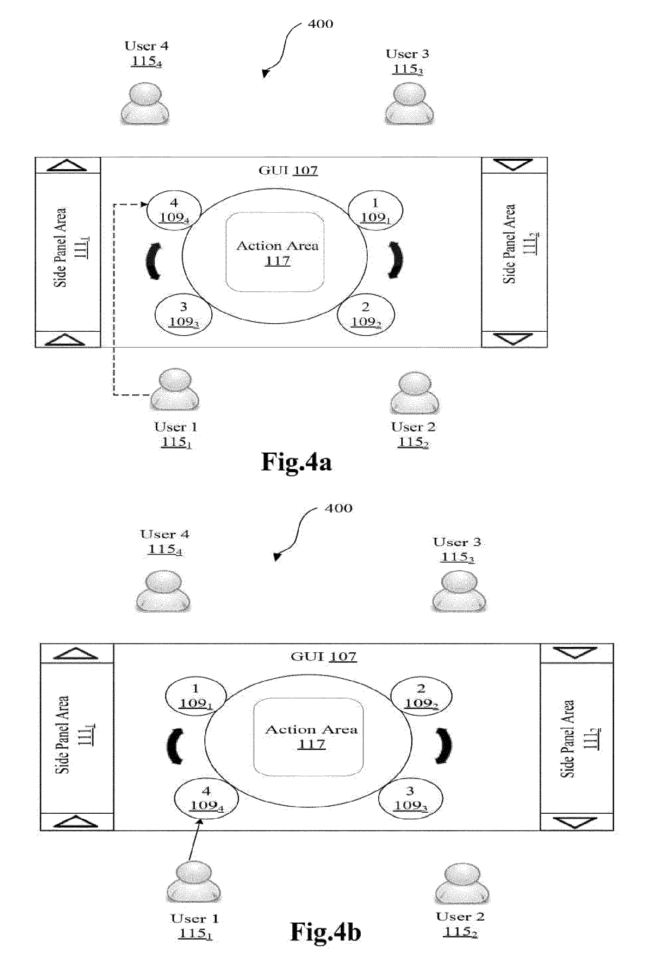

**Figs. 4a-4d** illustrates an exemplary environment for enhancing interaction efficiency of a multi-user collaborative GUI **107** in accordance with some embodiments of the present disclosure.

As shown in **Fig. 4a****,** the environment **400** may include one or more users, user 1 **115₁**. user 2 **115₂,** user 3 **115₃,** user 4 **115₄** (collectively referred as users **115)** interacting with the multi-user collaborative GUI **107.**

In operation, the processing unit **101** displays an object of interest which is common to the users **115** interacting with the GUI **107** on the action area **117.** The processing unit **101** also displays one or more menu icons, menu icon 1 **109₁**, menu icon 2 **109₂,** menu icon 3 **109₃** and menu icon 4 **109₄** associated with the object of interest on the periphery of the action area **117.** For example, the user 1 **115₁** may intend to select the menu icon 4 **109₄**. The menu icon 4 **109₄** is away from the reach of the user 1 **115₁**. In order to reach the menu icon 4 **109₄**, the user 1 **115₁** provides a signal and the processing unit **101** may rotate the one or more menu icons **109** in either a clockwise direction or an anti-clockwise direction such that the menu icon 4 **109₄** is near the position of the user 1 **115₁**. In one embodiment, the signal may be instruction provided to the processing unit **101** to rotate the one or more menu icons **109** in the clockwise direction or the anti-clockwise direction. The user would decide whether the one or more menu icons **109** must be rotated either in clockwise direction or anti-clockwise direction based on the distance between the user and the particular menu icon **109.**

As shown in **Fig. 4b****,** the processing unit **101** rotates the one or more menu icons **109** in the anti-clockwise direction such that the menu icon 4 **109₄** is towards the position of the user 1 **115₁**.

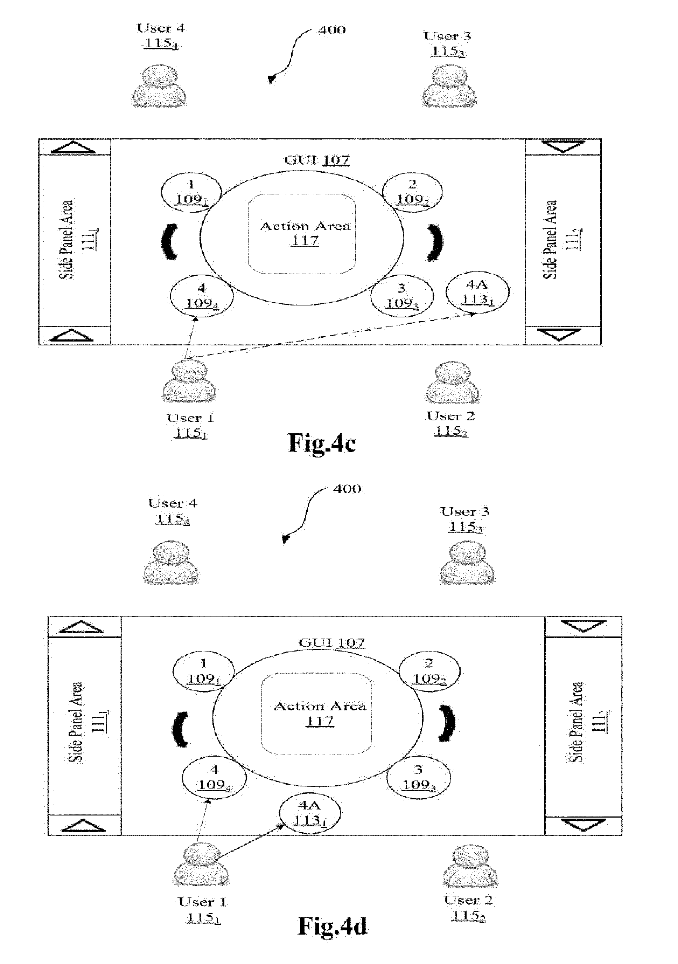

As shown in **Fig. 4c**, the user may select the menu icon 4 **109₄**. The processing unit **101** detects the selection of the menu icon 4 **109₄**. Thereafter, the processing unit **101** determines if there are one or more movable sub-menu icons associated with the selected menu icon 4 **109₄**. If the menu icon 4 **109₄** is not associated with one or more movable sub-menu icons, the processing unit **101** may execute the action corresponding to the selected menu icon 4 **109₄** on the object of interest to obtain a processed object. The processed object may be displayed on the action area **117.** In some other embodiments, the processed object may be displayed on either of the side panel area **111.**

In one implementation, the processing unit **101** determines that the sub-menu icon 4A **113₄** is associated with the selected menu icon 4 **109₄**. The processing unit **101** displays the sub-menu icon 4A **113₄** on the GUI **107.** In one implementation, the movable sub-menu icons are movable across the GUI **107.** Upon receiving the signal from the user 1 **115₁**, the processing unit **101** may move the sub-menu icon 4A **113₄** near the user 1 **115₁**.

As shown in Fig. **4d****,** the processing unit **101** moves the sub-menu icon 4A **113₄** near the user 1 **115₁**. In operation, when the user 1 **115₁** selects the sub-menu icon 4A **113₄**, the processing unit **101** detects the selection of the movable sub-menu icon 4A **113₄** and applies the action associated with the selected sub-menu icon 4A **113₄** on the object of interest. In some embodiments, if there is more than one sub-menu icons, the user 1 **115₁** may switch between the one or more menu icons to apply different actions on the object of interest. The processing unit **101** may process the object of interest based on the applied action to obtain the processed object. The processed object may be displayed on the action area **117.** In some other embodiments, the processed object may be displayed on either of the side panel area **111.**

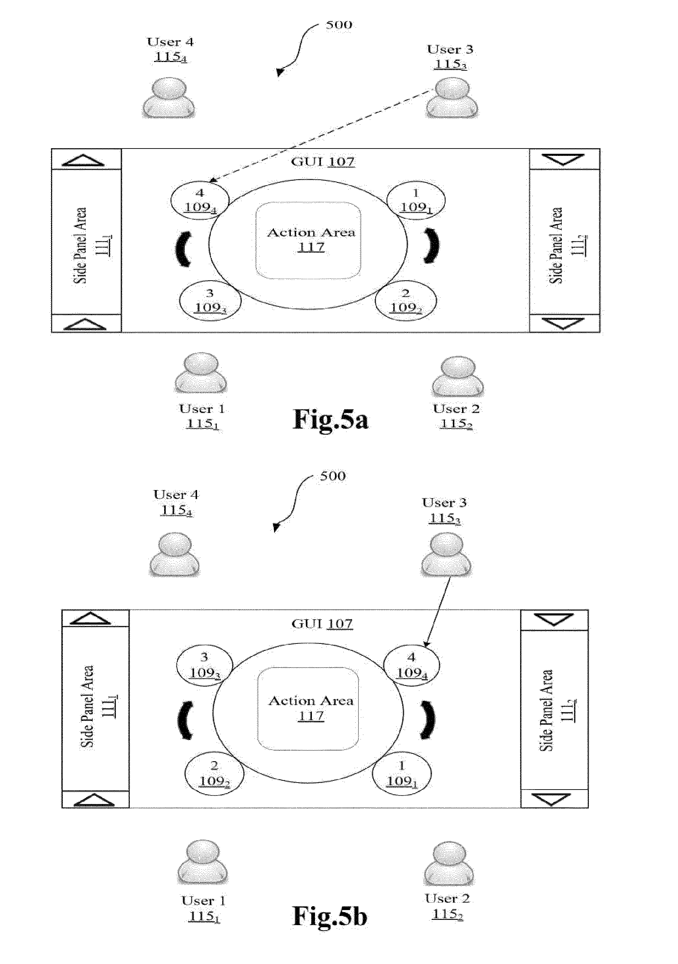

**Figs. 5a-5d** illustrates another exemplary environment **500** for enhancing interaction efficiency of a multi-user collaborative GUI **107** in accordance with some other embodiments of the present disclosure.

As shown in **Fig. 5a****,** the environment **500** may include one or more users, user 1 **115₁,** user 2 **115₂,** user 3 **115₃**, user 4 **115₄** (collectively referred as users **115)** interacting with the multi-user collaborative GUI **107.**

In operation, the processing unit **101** may display an object of interest which is common to the users on the action area **117.** The processing unit **101** also displays one or more menu icons, menu icon 1 **109₁**, menu icon 2 **109₂**, menu icon 3 **109₃** and menu icon 4 **109₄** associated with the object of interest on the periphery of the action area **117.** For example, the user 3 **115₃** may intend to select the menu icon 4 **109₄**. The menu icon 4 **109₄** is away from the reach of the user 3 **115₃**. In order to reach the menu icon 4 **109₄**, the user 3 **115₃** may rotate the one or more menu icons in either a clockwise direction or an anti-clockwise direction such that the menu icon 4 **109₄** is near the user 3 **115₃**.

As shown in **Fig. 5b****,** the processing unit **101** rotates the one or more menu icons **109** in clockwise direction such that the menu icon 4 **109₄** is near the user 3 **115₃**.

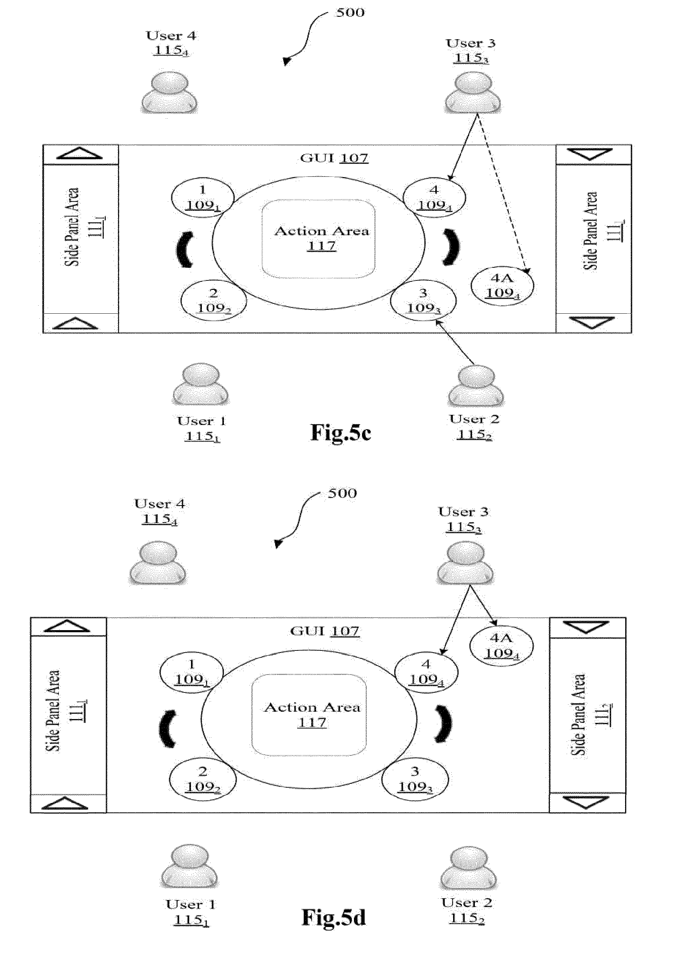

As shown in **Fig. 5c**, the user 3 **115₃** may select the menu icon 4 **109₄**. Simultaneously, the user 2 **115₂** may select the menu icon 3 **109₃**. The processing unit detects the selection of the menu icons, menu icon 4 **109₄** and menu icon 3 **109₃**. Thereafter, the processing unit **101** determines if there are one or more movable sub-menu icons **113** associated with the selected menu icons, menu icon 4 **109₄** and menu icon 3 **109₃**. In one embodiment, the processing unit **101** identifies that the menu icon 3 **109₃** is not configured with one or more movable sub-menu icons **113.** Therefore, the processing unit **101** applies the action associated with the selected menu icon3 **109**₃ on the object of interest to obtain a processed object. The processed object may be displayed on the action area **117.** In some other embodiments, the processed object may be displayed on either of the side panel area **111.**

In another embodiment, the processing unit **101** determines that the movable sub-menu icon 4A **109₄** is associated with the selected menu icon 4 **109₄**. The processing unit **101** displays the movable sub-menu icon 4A **109₄** on the GUI **107** as shown in **Fig.5c****.** In one implementation, the movable sub-menu icons are movable across the GUI **107.** The user 3 **115₃** may move the movable sub-menu icon across the GUI **107.**

As shown in **Fig. 5d****,** the user 3 **115₃** moves the movable sub-menu icon 4A **109₄** towards the position of the user 3 **115₃**. In operation, when the user 3 **115₃** selects the movable sub-menu icon 4A **109₄**, the processing unit **101** detects the selection of the movable sub-menu icon 4A **109₄** and applies the action associated with the selected movable sub-menu icon 4A **109₄** on the object of interest. In some embodiments, if there are more than one movable sub-menu icons, the user 3 **115₃** may switch between the one or more movable sub-menu icons to apply different actions on the object of interest. The processing unit **101** may process the object of interest based on the applied action to obtain the processed object. The processed object may be displayed on the action area. In some other embodiments, the processed object may be displayed on either of the side panel area **111.**

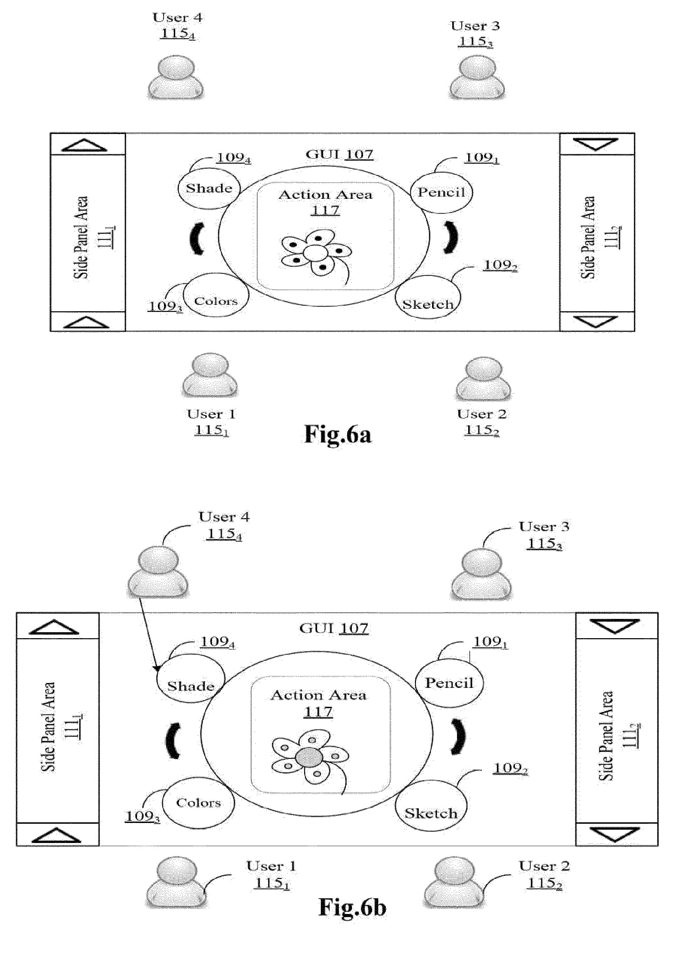

**Figs. 6a-6e** illustrates a method for enhancing interaction efficiency of a multi-user collaborative GUI **107** in accordance with some exemplary embodiments of the present disclosure.

As shown in **Fig. 6a****,** the one or more users, user 1 **115₁**, user 2 **115₂**, user 3 **115₃** and user 4 **115₄** interact with the GUI **107.** As an example, the application being executed in the device **100** is for creating a drawing wherein one or more users interact with the GUI **107** for creating the drawing. The processing unit **101** displays the object of interest on the action area **117.** The object of interest is the drawing canvas being displayed on the action area **117.** The image of a flower is provided in the drawing canvas. Thereafter, the processing unit **101** displays the one or more menu icons **109** on the periphery of the action area. The one or more menu icons **109** correspond to the one or more actions associated with the object of interest. The one or more menu icons which correspond to the one or more actions associated with the object of interest are menu icon pencil **109₁**, menu icon sketches **109₂**, menu icon color **109₃** and the menu icon shade **109₄**.

As shown in **Fig. 6b****,** the user 4 **115₄,** selects the menu icon shade **109₄**. The processing unit **101** detects the selection of the menu icon shade **109₄** and applies the action associated with the menu icon shade **109₄** on to the object of interest, which is the image of the flower. The processing unit **101** processes the object of interest based on the applied action i.e the action of providing a shade effect to the flower is performed to obtain a processed object. The processed object is a shaded flower, which is displayed on the action area **117.** In some embodiments, the processing unit **101** may display the shaded flower on the side panel area **111₁.** The user may orient the shaded flower in one or more directions.

In one implementation, the processing unit **101** displays the processed object onto the action area **117** wherein the one or more users may perform one or more actions on the processed object.

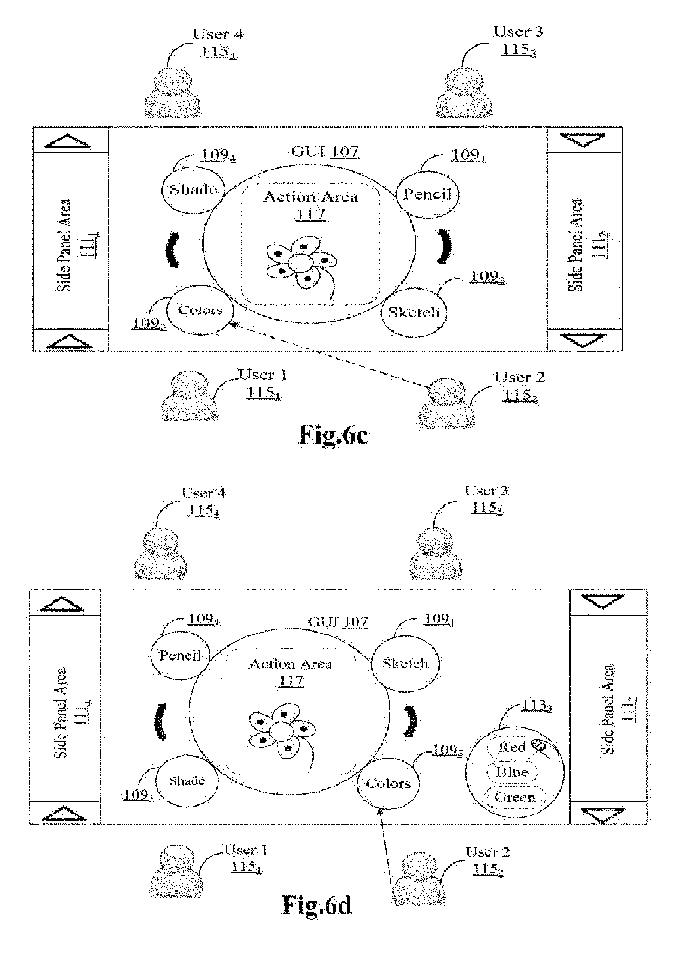

As shown in **Fig. 6c****,** the user 2 **115₂** may intend to select the menu icon color **109₃**. But since the menu icon color **109₃** is far away from the reach of the user 2 **115₂,** the user 2 **115₂** may rotate the one or more menu icons **109** in the anti-clockwise direction. By rotating the one or more menu icons **109** in the anti-clockwise direction, the menu icon color **109₃** is near the position of the user 2 **115₂.**

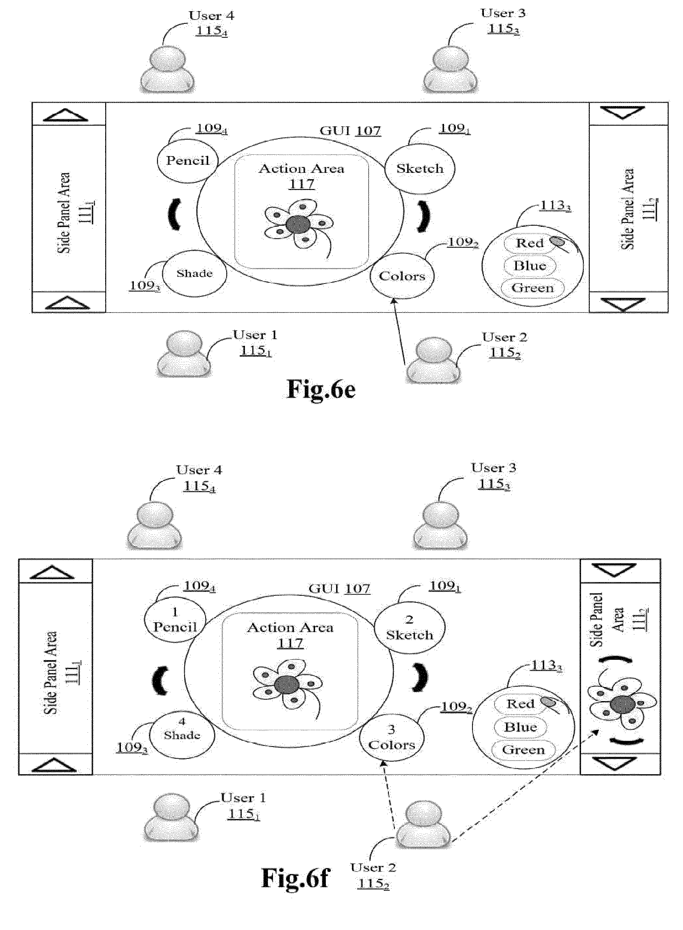

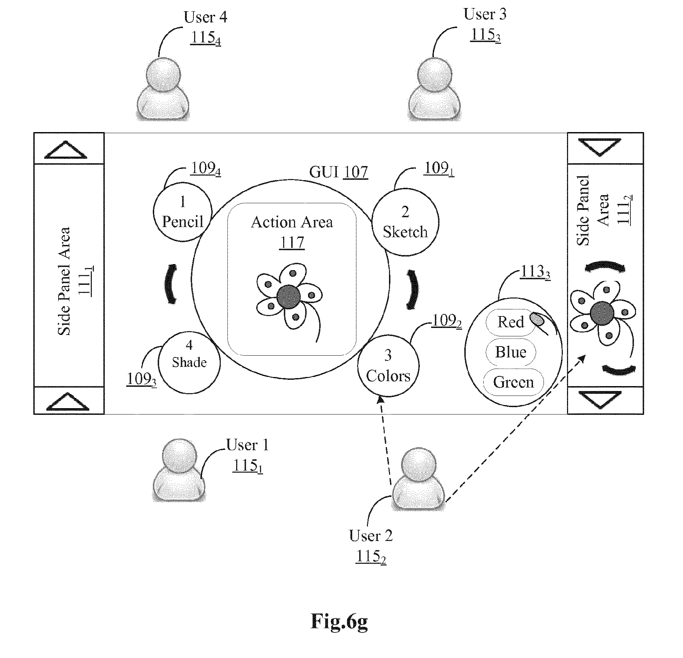

As shown in **Fig. 6d****,** the user 2 **115₂** may select the menu icon color **109₃**. The processing unit **101** detects the selection of the menu icon color **109₃**. The processing unit **101** detects that the menu icon color **109₃** is associated with a movable sub-menu icon **113₃**. The processing unit **101** displays the movable sub-menu icon **113₃** on the GUI **107.** The user 2 **115₂** may move the movable sub-menu icon **113₃** towards the position of the user 2 **115₂,** The movable sub-menu icon **113₃** includes three colors, namely red, blue and green. The user 2 **115₂** may select the red color. The processing unit **101** detects the selection of the movable sub-menu icon **113₃**. Thereafter, the processing unit **101** performs the action associated with the selected movable sub-menu icon **113₃** on the object of interest. The processing unit **101** processes the flower based on the selected color to obtain a processed object i.e the flower with red color is obtained. The red-color flower is displayed on the action area **117** as shown in **Fig. 6e****.** In some embodiments, the processing unit **101** may display the processed object on either of the side panel area **111.** The user 2 **115₂** may orient the processed object displayed on the side panel area **117** in one or more directions. For example, the processed object may be displayed on the second side panel area **111₂** as shown in the **Fig. 6f****.** The user 2 **115₂** may rotate the processed object in one or more directions. For example, the user 2 **115₂** may rotate the proceeded object in clock-wise direction and the processed object after rotation is as shown in the **Fig. 6g****.**

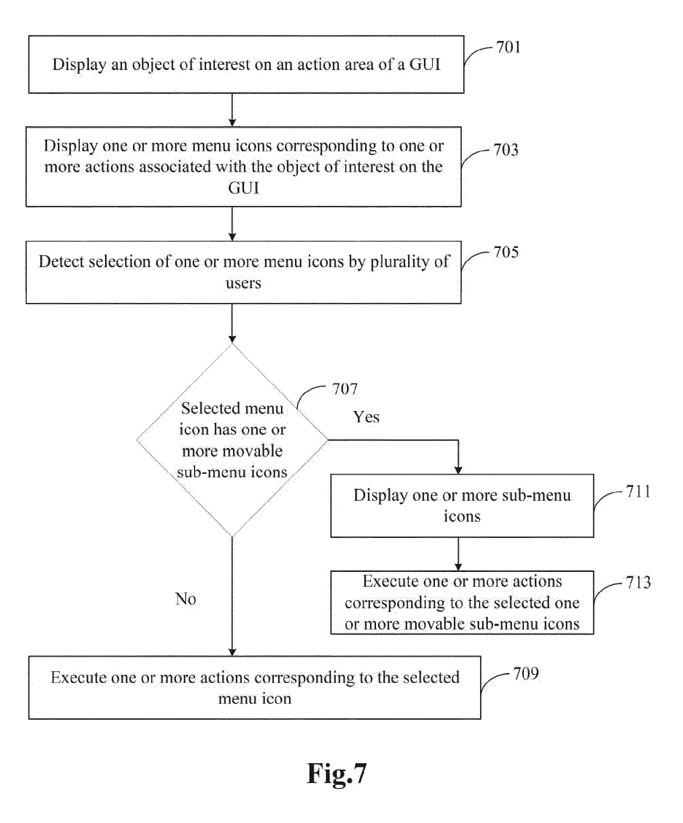

**Fig. 7** illustrates a flowchart of method of enhancing interaction efficiency of a multi-user collaborative GUI **107** in accordance with some other embodiments of the present disclosure.

As illustrated in **Fig. 7****,** the method comprises one or more blocks for enhancing interaction efficiency of a multi-user collaborative GUI **107.** The method may be described in the general context of computer executable instructions. Generally, computer executable instructions can include routines, programs, objects, components, data structures, procedures, modules, and functions, which perform particular functions or implement particular abstract data types.

The order in which the method is described is not intended to be construed as a limitation, and any number of the described method blocks can be combined in any order to implement the method. Additionally, individual blocks may be deleted from the method without departing from the spirit and scope of the subject matter described herein. Furthermore, the method can be implemented in any suitable hardware, software, firmware, or combination thereof.

At block **701,** an object of interest is displayed on an action area **117** of the GUI **107.** In one embodiment, the processing unit **101** displays an object of interest on an action area of the GUI **107.** The object of interest is common to plurality of users interacting with the GUI **107.** The object of interest is based on the application being executed in the device **100.**

At block **703,** one or more menu icons are displayed on the GUI **107.** In one embodiment, the processing unit **101** displays the one or more menu icons **109** on the GUI **107.** The one or more menu icons **109** correspond to one or more actions associated with the object of interest. The one or more menu icons **109** are displayed on either periphery of the action area **117** or on the boundary of the action area **117.** The one or more menu icons **109** are rotatable in either a clock-wise direction or an anti-clockwise direction. The one or more users **115** interacting with the multi-user collaborative GUI **107** may rotate the one or more menu icons **109** such that the intended menu icons are near the position of the user i.e the user doesn't have to move around the GUI **107** for interacting with the GUI **107.** The GUI **107** orients itself based on the specific needs of the user and without obstructing other users' interactions with the GUI **107.**

At block **705,** the processing unit **101** detects selection of one or more menu icons **109** by plurality of users **115.** In one embodiment, the plurality of users **115** may select one or more menu icons **109** displayed on the GUI **107.** The processing unit **101** detects the selection of the one or more menu icons **109** and process the one or more actions corresponding to the selected one or more menu icons **109.**

At block **707,** the one or more menu icons **109** are checked for one or more movable sub-menu icons. In one embodiment, the processing unit **101** determines whether the selected one or more menu icons **109** are associated with one or more movable sub-menu icons. In one embodiment if the determination at block **707** follows the "NO" loop, then the method proceeds to block **709** via "No". If the determination is "TRUE", then the method proceeds to block **711** via "Yes".

At block **709,** one or more actions corresponding to the selected menu icon **109** are executed. In one embodiment, the processing unit **101** applies the one or more actions on the object of interest to obtain a processed object. The processed object may be further displayed on the action area **117** for performing one or more further actions.

At block **711,** one or more movable sub-menu icons are displayed on the GUI **107.** In one embodiment, the processing unit **101** displays one or more movable sub-menu icons on the GUI **107.** The one or more movable sub-menu icons are movable across the GUI **107.** Upon receiving a signal from the user, the processing unit **101** moves the movable sub-menu icons to the position of the users. The one or more movable sub-menu icons correspond to one or more actions associated with the object of interest. The user may select one or more movable sub-menu icons.

At block **713,** one or more actions corresponding to the selected one or more movable sub-menu icons are displayed. In one embodiment, the processing unit **101** detects the selection of the one or more movable sub-menu icons. Thereafter, the processing unit **101** applies the one or more actions corresponding to the selected one or more movable sub-menu icons on the object of interest to obtain a processed object. The processed object is displayed on the action area **117.** In some embodiments, the processed object may be displayed on either of the side panel area configured in the GUI **107.**

The specification has described a method and a system for enhancing interaction efficiency of a multi-user collaborative GUI. The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope and spirit of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processing unit may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., are non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of the disclosed embodiments being indicated by the following claims.

## Claims

1. A multi-user collaborative graphical user interface (GUI) for a device, comprising:
an action area configured to display an object of interest, wherein the object of interest is common to a plurality of users interacting with the GUI; and
one or more menu icons corresponding to one or more actions associated with the object of interest, wherein the one or more menu icons are rotatable in at least one of clockwise and anti-clockwise directions.

2. The GUI as claimed in claim 1 further comprising one or more movable sub-menu icons corresponding to one or more actions associated with the object of interest, wherein the one or more movable sub-menu icons are movable across the GUI.

3. The GUI as claimed in claim 1 or claim 2, further comprising at least one side panel area to display the object of interest processed by a processing unit of a device, wherein the processed object is orientable in one or more directions.

4. The GUI as claimed in any of the preceding claims, wherein the one or more menu icons are configured to be displayed on at least one of boundary of the action area and periphery of the action area.

5. A method of enhancing interaction efficiency of a multi-user collaborative graphical user interface (GUI), the method comprising:
displaying, by a processing unit of a device, an object of interest on an action area of the GUI, wherein the object of interest is common to a plurality of users interacting with the GUI;
displaying, by the processing unit, one or more menu icons corresponding to one or more actions associated with the object of interest, wherein the one or more menu icons are rotatable in at least one of clockwise and anti-clockwise directions;
detecting, by the processing unit, selection of the one or more menu icons by the plurality of users, wherein the selection of one or more menu icons causes the processing unit to perform at least one of:
displaying one or more movable sub-menu icons corresponding to one or more actions associated with the object of interest; and
executing the one or more actions corresponding to the selected one or more menu icons on the object of interest to obtain a processed object.

6. The method as claimed in claim 5 further comprising displaying, by the processing unit, the processed object on at least one side panel area of the GUI.

7. The method as claimed in claim 5 or 6, further comprising orienting, by the processing unit, the processed object in one or more directions.

8. The method as claimed in any of claims 5 to 7, further comprising displaying, by the processing unit, the one or more menu icons on at least one of boundary of the action area and periphery of the action area.

9. The method as claimed in any of claims 5 to 8, wherein the one or more movable sub-menu icons are movable across the GUI.

10. The method as claimed in any of claims 5 to 9 further comprising:
detecting, by the processing unit, selection of the one or more movable sub-menu icons by the plurality of users; and
executing, by the processing unit, the one or more actions corresponding to the selected one or more movable sub-menu icons on the object of interest to obtain the processed object.

11. A device for enhancing interaction efficiency of multi-user collaborative graphical user interface (GUI), the device comprising:
a multi touch screen display to receive a touch of an input means on the GUI displayed on the touch screen display;
at least one processing unit; and
a memory storing instructions executable by the at least one processor, wherein the instructions configure the at least one processing unit to perform the method of any of claims 5 to 10.

12. A non-transitory computer readable medium including operations stored thereon that when processed by at least one processing unit cause a device to perform the method of any of claims 5 to 10.
